**Europäisches Patentamt**

**European Patent Office**

**Office européen des brevets**

(19)

(11) Publication number: **0 151 373**

**A1**

(12) # EUROPEAN PATENT APPLICATION

(21) Application number: **84830298.0**

(22) Date of filing: **02.11.84**

(51) Int. Cl.⁴: **G 03 B 27/32**

(30) Priority: **25.11.83 IT 363883**

(43) Date of publication of application:
**14.08.85 Bulletin 85/33**

(84) Designated Contracting States:
**AT BE CH DE FR GB LI LU NL SE**

(71) Applicant: **POLIELETTRONICA S.p.A.**
**Via Nazionale, 51**
**I-45030 Occhiobello Frazione S.M. Maddalena**
**(Rovigo)(IT)**

(72) Inventor: **Valentinuzzi, Luciano**
**Viale Cavour 136**
**I-44100 Ferrara(IT)**

(72) Inventor: **Poli, Bruno**
**Via Nazionale 51a I-45030 Occhiobello**
**Frazione S.M. Maddalena (Rovigo)(IT)**

(74) Representative: **Lanzoni, Luciano**
**c/o BUGNION S.p.A. Via Farini, 37**
**I-40124 Bologna(IT)**

(54) **Device for moving photographic paper in a printer.**

(57) The invention belongs to the technical field of equipment for giving motion to, cutting, carrying and automatically removing photographic paper, and relates, in particular, to a device for moving photographic paper in a printer.

The technical problem to be solved is how to construct a device of the said nature able to position with precision a web, unwound from a reel, of photographic paper, to expose the paper, and subsequently to cut the paper into sheets, the lengths of which are constantly exact even when the size of the exposure window varies.

The solution to the problem is obtained with a device that comprises means 13 for controlling the displacements of the photographic paper 6a and for operating drive elements 11 in a way whereby the said paper is made to move forward in steps proportional to the size of the said exposure window 7; the said control means comprising a plurality of sensors 13a-13b able to detect the position of the cut edges of the photographic paper and, in consequence, to bring about the non-operation of the said drive elements 11.

EP 0 151 373 A1

./...

FIG.1

Device for moving photographic paper in a printer

The invention relates to a device for moving photographic paper, or equivalent photosensitive material, in a printer.

As is known, certain items of equipment are on the market at the present time that have been studied for effecting the extraction of virgin photographic paper, normally kept reeled, from a purposely provided paper storage cassette, and for attending to the subsequent exposure and then to the rewinding after exposure of the said paper. Alternatively, the said known items of equipment are able, after the extraction of the photographic paper and the exposure thereof, to attend to the cutting to size of the sheets exposed and either the carrying of the said sheets to a developer or the prior stacking thereof.

All the said known items of equipment effect the driving of the web of photographic paper by means of a pair of oppositely placed rollers : the photographic paper, inserted in between the said rollers, is made to move forward each time the said rollers are carried in motion. In this way, the photographic paper is dragged forward and thrust alternatively into the exposure position and into the subsequent cutting position.

The positioning of the photographic paper at points corresponding to the exposure window and to the cutter is achieved by the movement of the said rollers being subjected to control means of the type able to detect the extent of the rotation of the said rollers and to correlate the said rotation with the distance forward required for the paper. In practice, the position of the photographic paper is calculated solely on the basis of the rotation of the drive rollers, and thus on the supposition that no skidding occurs between the paper and the said rollers.

When put into use, the said items of equipment show the said premise to be wrong : skidding and slipping between the rollers and the paper take place in many instances and, indeed, the faster the pace of the printer or, in other words, the greater the volume of work and the financial importance of the said printer, the more accentuated is the said phenomenon.

Slipping between the paper and the rollers is particularly serious on account of the fact that with the aforementioned means of control, the paper is systematically halted in the wrong position, causing the partial superimposition of the images projected thereon, and the cutting to a wrong size of the sheets.   Moreover, each additional uncontrolled sideways movement is added to those that have taken place previously.

Another problem with the items of equipment known at present, one that is to say naturally inherent therein, is that in view of the described structure, delicate adjustment operations are required when the size of the exposure window varies.

The technical task that constitutes the basis of the invention is, in view of the foregoing, to eliminate the problems outlined above and to construct a device able to position, with precision and absolute reliability, the photographic paper in both the exposure position and the cutting position thereof, with the elimination of false positions resulting from slipping occurring between the drive elements and the photographic paper undergoing forward movement.

One important object of the invention, within the framework of the said technical task, is to devise a device able to adapt itself to any variation in the size of the exposure window, with the automatic and precise displacement of the means responsible for the subsequent phases in the treatment of the photographic paper.

Another, though not final, object of the invention is to make available a system that is simple, inexpensive and easily realizable by industries in the field concerned.

The prior mentioned technical task and the objects outlined above are achieved with the device according to the invention for moving photographic paper in a printer impervious to light and provided with photographic equipment facing an exposure window, and with a cutter for the said photographic paper, the said device comprising elements for carrying forward a web of the said photographic paper from a commencement reel to the said exposure window and thence to the said cutter, and for carrying sheets of the said photographic paper from the said cutter towards the outside of the said printer; and, furthermore, means for controlling the displacements of the said photographic paper and for operating the said drive elements in a way whereby the said web is made to move forward in steps proportional to the size of the said exposure window; and wherein the said control means comprise a plurality of sensors placed downstream of the said cutter, in the forward movement direction of the said web, able to detect the position of the cut
edges of the said sheets and, in consequence, to bring about
the non-operation of the said drive elements.

Advantageously, the said control means comprise at least
one sensor placed downstream of the said cutter at a distance away from the said exposure window identical to or a
multiple of the size of this, and a second sensor, downstream of the former in the forward movement direction of
the said sheets, a distance away from the first sensor identical to the spacing between the said exposure window and
the said cutter.

Further characteristics and advantages of the device according to the invention will become more apparent from the following description of one preferred embodiment, illustrated
purely as an unlimited example on the accompanying drawings,
in which :

- Figure 1 shows, in a diagrammatic general cutaway view,
a printer provided with the device in question;
- Figure 2 shows, by themselves in a perspective view on
a larger scale than in the preceding figure and with some
parts removed in order that others may be more visible, oscillatory mechanical means for supporting a pair of sensors.

With reference to the above listed figures, the movement
device according to the invention, shown globally at 1, is
inserted in a printer 2 in itself known.

The said printer 2 is, in brief, provided with a fixed supporting frame 3 equipped with a casing 4 that is impervious to light, and with a cassette 5, also impervious to light, in which is inserted a commencement roll 6 of photographic paper 6a. Provided between the cassette 5 and the casing 4 is an exposure window 7 at which operates photographic equipment 8. The photographic paper 6a unwound from the roll 6 is exposed in the exposure window 7.

In a way again in itself known, the printer 2 comprises a cutter 9 able to subdivide the web of photographic paper 6a unwound from the roll 6 into a number of sheets 6b cut to the size of the exposure window 7.

The printer 2 terminates, in the embodiment illustrated, at a tray 10 for collecting and stacking the sheets 6b of photographic paper, though it is obvious that the printer can be linked up directly to a machine for developing the sheets.

The movement device 1 forming the subject of the invention essentially comprises elements for driving the photographic paper and means for controlling the displacements of the said photographic paper. The latter operate the said drive elements.

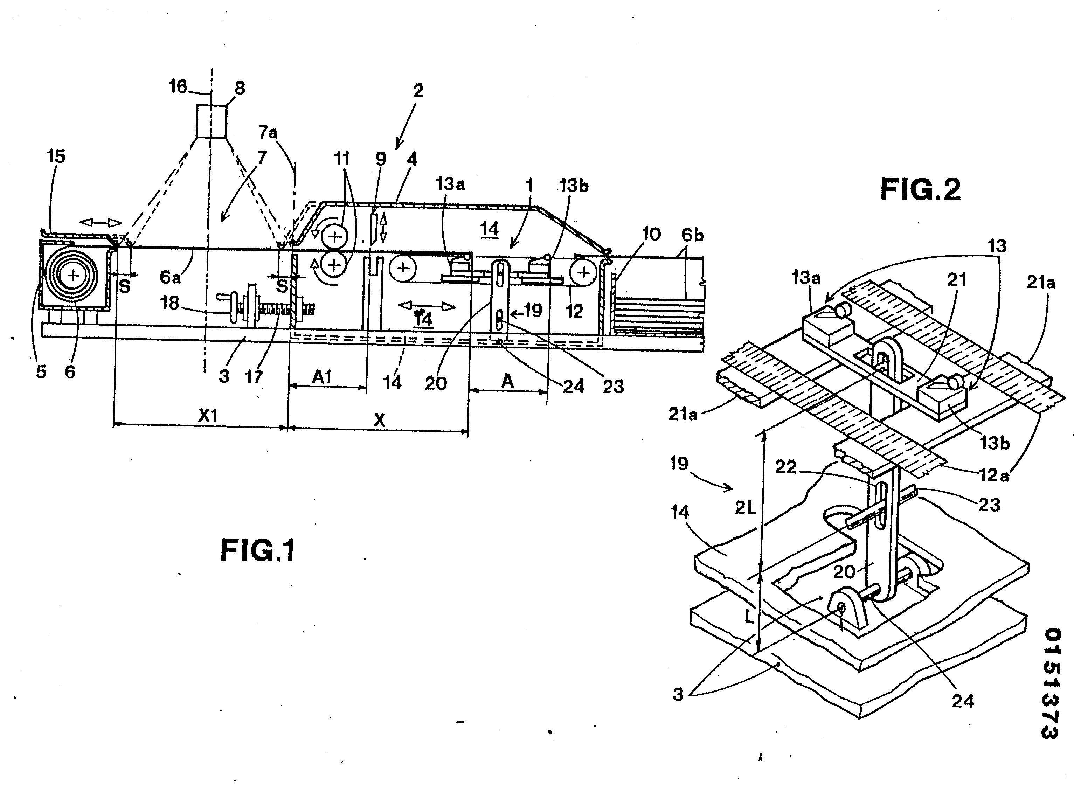

In detail, as shown in particular in Figure 1, the drive means comprise, in the technical solution described herein, a pair of oppositely placed rollers 11 in between which is unwound the web of photographic paper. The rollers 11 are, in fact, inserted in the casing 4 between the exposure window 7 and the cutter 9. Downstream of the latter, in the forward movement direction of the web of photographic paper, provision is made for an auxiliary conveyor 12, virtually in the form of conveyor belts 12a, by which the cut sheets are made to move forward towards the tray 10. An original aspect of the invention is that the auxiliary conveyor 12 is able to give the cut sheets a traversing speed slightly greater than that of the web that slides between the rollers 11, in such a way as to create consecutive sheets slightly apart.

The control means envisaged for the invention are constituted by sensors 13, preferably microswitches, placed downstream of the cutter 9 in the region of the auxiliary conveyor 12.

The said sensors 13 are set to detect the position of the edges of the sheets moved by the auxiliary conveyor 12 and, in consequence, to bring about the non-operation of the drive elements, in particular the rollers 11. Depending on the requirements, the number of the said sensors 13 can be much greater. However, shown in the figures is a technical solution, in itself advantageous, based on the use of only two sensors, namely a first sensor 13a and a second sensor 13b, the latter spaced away from the former in the movement direction of the photographic paper.

The first sensor 13a is placed downstream of the cutter 9, in the forward movement direction of the photographic paper, at a distance X (see Figure 1) from the most adjacent edge 7a of the exposure window 7 identical to or a multiple of the size $X_1$ of the said exposure window 7.

The second sensor 13b is placed at a distance A from the

7.

0151373

the first sensor 13a identical to the distance $A_1$ between the line of action of the cutter 9 and the previously mentioned most adjacent edge 7a of the exposure window 7.

Furthermore, it is envisaged that the said sensors determine the cessation in the rotation of the rollers 11 and that the resumption of the rotation of these be determined by the operation of the photographic equipment 8 and of the cutter 9.

The invention also makes provision for the movement device 1 to be suited automatically to variations in the dimensions of the exposure window 7.   The sensors 13 and the cutter 9 are, in fact, movable and inserted in a slide 14 that moves smoothly in the frame 3, in a direction parallel to the forward movement direction of the photographic paper. The movement of the sensors 13 and of the cutter 9 is determined by mechanical means of transmission set in action directly with the displacements of the margins of the exposure window 7.

In greater detail, the exposure window 7 is delimited, in the forward movement direction of the photographic paper, by a cover 15 placed above the cassette 5, and by one extremity of the said slide 14 above which overhangs the casing 4.   The expansion of the exposure window 7 envisages, therefore, the slide 14 being moved away from or being brought towards the optical projection axis 16 through, for example, an adjusting screw 17 controlled by a purposely provided handwheel 18.   The displacement of the slide 14 determines an identical displacement of the cutter 9.

The displacement of the sensors 13 is, instead only indirectly imposed by the slide 14 : the said sensors are, in fact, connected to a positioning device 19 shown by itself in Figure 2.

The said device comprises an oscillatory arm 20 that supports at the top, through a cross member 21 loosely pivoted thereto, the sensors 13a and 13b (see again Figure 2). The lower extremity of the said arm 20 is, instead, pivotally connected to the fixed frame 3, and the connection with the slide 14 is realized only in an intermediate position thanks to an axial slot-pin coupling. The oscillatory arm 20 has, in fact, machined in it an axial slot 22 into which is inserted a pin 23 integral with the slide 14.

The position of the pin 23 along the oscillatory arm 20 determines the final displacement of the sensors 13.

In Figure 2 it is shown that the distance between the sensors 13 and the pin 23, shown at 2L, is twice that of the distance L between the pin 23 and the point 24 at which the oscillatory arm 20 is pivoted to the fixed frame 3. It thus ensues that with each displacement S of the pin 23 with respect to the pivot 24, the sensors 13 traverse a distance 3S. On the basis of what has been outlined above, S is the displacement of the edge 7a of the exposure window 7, at the time the latter is expanded, as well as the displacement of the slide 14 and of the cutter 9. The distance between the cutter 9 and the edge 7a of the exposure window 7 thus always remains constant, as does the distance between the sensors 13a and 13b. The distance X of the first sensor 13a away from the edge 7a of the exposure window 7 varies, instead, in harmony and identically with the variation in the size X1 of the latter.  It is, in fact, apparent that with a 2S expansion in the exposure window 7, the first sensor 13a will be spaced away from the edge 7a at a distance equal to $X + 3S-S = X + 2S$ under the action of the oscillatory arm 20, with a horizontal plane being maintained by, for example, the presence of the locator members 21a (Figure 2).

The limits in the size of the length X, coinciding with the length X1, depend only on practical needs : the exposure window 7 cannot expand to the point of coming into physical contact with the fixed elements adjacent thereto, and the first sensor 13a cannot approach the cutter 9 beyond a certain limit.

How the movement device according to the invention operates is obvious from what has been described above.  The photographic paper is unwound from the roll 6 by the rollers 11 and is subsequently carried to the exposure window 7 and to the cutter 9, after which the auxiliary conveyor 12 preferably operates.  The first microswitch 13a halts the flow of photographic paper once one edge of this arrives in proximity and determines the starting up of the photographic equipment 8.  Following this, the forward movement of the paper is resumed automatically until the second sensor 13b is engaged, this in turn halting the flow of paper and determining the operation of the cutter 9.

Once the paper has been cut, the forward movement thereof is again resumed and the cycle is repeated.

It is stated that in the giving of motion to the photographic paper, the displacement values effected on each occasion are as detailed hereunder.

Following the operation of the photographic equipment 8, the paper is made to move forward a distance A1 (Figure 1). In this situation, the second sensor 13b, placed an overall distance equal to $A_1+X$ away from the exposure window, operates. The subsequent forward movement is effected for a distance $X-A_1$ up until the first sensor 13a is made to operate, and this determines the operation anew of the photographic equipment 8.

Thus the device according to the invention attains the objects proposed.

The efficiency and functional possibilities of the technical solution employed are stressed, thanks to which the positioning of the photographic paper is completely independent of the efficaciousness of the drive elements thereof. Furthermore, emphasis is laid on the fact that variations in the size of the exposure window 7 can be effected through one single control group instead of by displacing the cover 15 and by operating the handwheel 18.

The invention, as conceived, is liable to undergo numerous modifications and variants, all of which falling within the conceptual framework thereof. Also, all the component parts may be substituted with others technically equivalent. In practice, the materials used, as also the shapes and sizes thereof, may be any according to the requirements.

11.

Claims:

1. Device for moving photographic paper 6a in a printer of the type that is provided with a casing 4 impervious to light, photographic equipment 8 facing an exposure window 7, and a cutter 9 for the said photographic paper, the said device comprising elements 11 for carrying forward a web of the said photographic paper from a commencement reel 6 to the said exposure window 7 and thence to the said cutter 9, and for carrying sheets 6b of the said photographic paper from the said cutter 9 towards the outside of the said printer; and, furthermore, means 13 for controlling the displacements of the said photographic paper and for operating the said drive elements 11 in a way whereby the said web is made to move forward in steps proportional to the size of the said exposure window 7; and wherein the said control means 13 comprise a plurality of sensors 13a-13b placed downstream of the said cutter, in the forward movement direction of the said web, able to detect the position of the cut edges of the said sheets and, in consequence, to bring about the non-operation of the drive elements 11.

2. Device according to Claim 1, wherein the said control means comprise at least a first sensor 13a placed, downstream of the said cutter 9, a distance X away from the said exposure window identical to or a multiple of the size X1 of this, and a second sensor 13b, downstream of the first sensor 13a in the forward movement direction of the said sheets, spaced away there from at a distance A identical to the distance A1 between the said exposure window 7 and the said cutter 9.

3. Device according to Claim 2, wherein the said first sensor 13a is designed to bring about the halting of the said drive elements 11 and the operation of the said photographic equipment 8, and the second sensor 13b is designed to bring about the halting of the said drive elements 11 and the operation of the said cutter 9, the said photographic equipment 8 and the said cutter 9 determining, through the operation thereof, the re-actuation of the said drive elements.

4. Device according to Claim 1, wherein the said drive elements comprise a pair of rollers 11, placed between the said exposure window 7 and the said cutter 9, for causing the said web to move forward, and an auxiliary conveyor 12 downstream of the said cutter 9.

5. Device according to Claim 4, wherein the said auxiliary conveyor 12 is able to give the photographic paper a greater forward movement speed than that set by the rollers 11.

6. Device according to Claim 1, wherein the said sensors 13 and the said cutter 9 are movable and inserted at least in one slide 14 that moves smoothly parallel to the forward movement direction of the said photographic paper, under the control of transmission means 19 actuated by the displacement in the margins of the said exposure window.

7. Device according to Claim 6, wherein the said slide 14 is able to traverse together with one margin 4 of the said exposure window 7, under the control of an adjusting screw 17.

8. Device according to Claim 6, wherein the said sensors 13 are able to move, with respect to the said slide 14, in such a way as to effect in the same direction as this, a displacement of a greater length.

9. Device according to Claim 8, wherein the said means of transmission of the said sensors 13 comprise an oscillatory arm 20, the upper part of which supports the said sensors 13, and the lower part of which is pivotally connected at 24 to the fixed frame 3 of the printer, the said arm engaging centrally, at a point corresponding to an axial slot 22, with a pin 23 connected to the said slide 14 and movable there with, the said pin 23 being placed a distance away from the said sensors 13 twice that away from the said pivoting point 24.

0151373

FIG.2

FIG.1

## DOCUMENTS CONSIDERED TO BE RELEVANT

EP 84830298.0

| Category | Citation of document with indication, where appropriate, of relevant passages | Relevant to claim | CLASSIFICATION OF THE APPLICATION (Int. Cl.4) |
|---|---|---|---|
| A | <u>US - A - 4 046 470</u> (YAMAMOTO)<br>* Abstract; fig. 1-5; claims 1-6 * | 1-9 | G 03 B 27/32 |
| A | <u>DE - A1 - 2 938 576</u> (MINNESOTA MINING)<br>* Claim; fig. 1 * | 1-9 | |
| A | <u>GB - A - 2 047 210</u> (MITA INDUSTRIAL CO.)<br>* Abstract; fig. 2; claims 1 to 11 * | 1-9 | |
| A | <u>US - A - 3 564 960</u> (FOULKS)<br>* Abstract; fig. 1,2; claims 1 to 5 * | 1-9 | |
| A | <u>DE - A - 2 424 624</u> (AGFA)<br>* Fig. 1 * | 1 | **TECHNICAL FIELDS SEARCHED (Int. Cl.4)**<br><br>G 03 B 27/00<br>G 03 B 1/00<br>G 03 G 15/00<br>B 26 D 5/00 |

The present search report has been drawn up for all claims

| Place of search | Date of completion of the search | Examiner |
|---|---|---|
| VIENNA | 27-03-1985 | VAKIL |